# EUROPEAN PATENT APPLICATION

(11) **EP 2 860 503 A2**
(43) Date of publication of application: **15.04.2015**
(21) Application number: 14174040.7
(22) Date of filing: 26.06.2014
(51) Int. Cl.: G01K 11/32

(54) **Method and apparatus for measuring the temperature of rotating machining tools**

(30) Priority: 27.06.2013 US 201361839953 P
(71) Applicant: Rüeger S.A., 1023 Crissier (CH)
(72) Inventor: Willing, Bert, 1807 Blonay (CH); Assal, Patrick Alexandre Jacques, 1066 Epalinges (CH)
(74) Representative: Klocke, Peter

(57) **Abstract**

A method for measuring the temperature of rotating machining tools, comprising providing an optical fiber sensor (1'); inserting said optical fiber sensor (1') into the rotating machining tool (4); directing light from a light source (7) into said optical fiber (1) of said fiber sensor (1'); detecting changes of optical properties of said optical fiber sensor (1') as a function of temperature in the reflected light leaving said optical fiber (1); and correlating said changes of optical properties to the temperature of the machining tool (4). The apparatus comprises the respective elements. The present invention proposes a solution for the temperature measurement in rotating machining tools which avoids the transmission of electrical signals, and which can be integrated even in very small machining tools such as small dental drills. It continuously measures the temperature of the machining tool and is not sensitive to liquid coolants. Although the invention is primarily targeted to the application with dental implants, it is as well applicable to other medical applications as orthopedic implants, and to rotating machining tools in general.

## Description

### Field of the Invention

The invention concerns a method and an apparatus for measuring the temperature of rotating machining tools.

### Background

During the machining with mechanical cutting or grinding tools, the friction of the tool with the machined part can generate significant amounts of heat. Depending on the nature of the machined part and its material, excessive heating during machining may irreversibly damage the machined part and/or the machining tool.

Today, avoidance of such excessive heat generation is primarily based on a heuristic approach which considers angular speed, torque, linear speed of the tool and the feedrate of a gaseous or liquid coolant which may be injected to the machining interface. For any given application, a parameter range for these variables is based on past experience, and staying within this parameter range will yield a high probability that damage due to excessive heat can be avoided. However, for machining applications with tight temperature tolerances, a direct measurement of the temperature of the tool, or of the machined surface, would be most beneficial. In the case of dental implant site preparation, it has been shown by various authors that exceeding the temperature threshold of 47°C for more than 1 minute will lead to bone necrosis which in turn will compromise the stability of the dental implant.

### State of the Art

The implementation of a continuous temperature measurement of the machined surface has proved to be very difficult. A direct contact measurement of the surface is not feasible due to the fact that this surface is being machined away.

The measurement of the temperature with an infrared thermometer (for example a pyrometer) will give only reliable results in cases where there is an unobstructed view of the object's or tool's surface. Any addition of liquid coolant will absorb the infrared temperature radiation and jeopardize any useful reading. Additionally, this method is only of limited use for the reading of surface temperatures in cavities.

The implementation of an electrical temperature probe within the tool, as a resistive temperature sensor or a thermocouple, is not feasible due to the angular speed of the tool (between 1000 rpm and 300'000 rpm), which makes reliable, noise-free electrical connections to the temperature probe located inside the tool extremely difficult.

A recently developed approach uses a thermocouple as sensor element located inside the rotating tool, which communicates with the close-by readout circuitry via a radio frequency link. The communication chip is also located on the rotating tool and receives its operating energy via the radio frequency link. Due to the size of such an installation, its application is limited to relatively large machining tools.

### Object of the Invention

The object of the present invention is to provide a method and an apparatus which allow a cost-efficient temperature measurement in rotating machining tools while avoiding the transmission of electrical signals, which can be integrated even in very small machining tools and which is not sensitive to liquid coolants.

### Summary of the Invention

The above mentioned object is solved by the present invention as claimed in the independent method and apparatus claims. Further advantageous features are claimed in the respective sub claims.

The core element of the invention is an optical fiber temperature sensor which is inserted axially into the center of the machining tool; such a fiber typically has a diameter of one to several tenth of a millimeter, which is small enough to allow insertion into most of the drills used for dental implant site preparation.

The measurement principle of the optical fiber temperature sensor may be based on a Bragg grating, on Raman scattering, on the measurement of the band gap of a semiconductor probe attached to the fiber, or on any other principle where a change in temperature gives rise to a change in the optical properties of the fiber or of a probe attached to the fiber. For dental implant site preparation, the required temperature measurement range is from 25°C to 55°C, together with an accuracy of ± 0.1°C or better. The preferred embodiment of the invention will therefore an optical fiber temperature sensor based on a Bragg grating.

Such a Bragg grating temperature sensor consists of an optical fiber which carries a section where the fiber's index of refraction changes periodically. This said section therefore represents a mirror for light of which a multiple of the half-wavelength matches the geometrical periodicity of the refractive index change. Light not meeting the selection criterion is not affected by said section of the optical fiber and will travel undisturbedly, whereas light meeting the selection criterion will be reflected backwards.

If the optical fiber is subjected to a temperature change, it will change its length according to the thermal expansion coefficient of the optical fiber's material, and the periodicity of the refractive index change region will change by the same percentage. As said periodicity determines the wavelength of the reflected light beam, the measurement of the wavelength of the reflected light beam can be directly correlated to the temperature of the optical fiber, and thus of the machining tool.

The optical fiber is located in axial direction inside the tool. The corresponding cavity receiving the optical fiber can be produced by the usual means, for example electro-erosion in the case of metallic tools, or polymer inserts in the case of ceramic tools. The optical fiber may also be placed in the cavity originally intended for the feeding of coolant.

The temperature sensitive part of the optical fiber (which, in the case of Bragg reflection, is the optical Bragg grating imprinted onto the fiber) may be located at any position along the optical fiber within the tool. In case of a temperature measurement at multiple locations along the fiber, multiple Bragg gratings with differing grating constants may be placed along the optical fiber at appropriate locations.

The far end of the optical fiber (which, if located inside a drill, would be near the cutting end of the drill) may be executed in any way as to minimize reflection of light from this end surface of the fiber.

At the shaft end of the tool, the optical fiber is ended approximately flush with the shaft end of the tool, and its optical end surface is executed in a way which facilitates the coupling of light into the fiber, and the receiving of light from the fiber. To this purpose, the shaft end of the fiber may be coupled to any optical component which increases the light coupling efficiency, such as a ball lens.

With the knowledge of the thermal conductivity of the drill's material, the temperature of the outer surface of the drill can be estimated as a function of the optical fiber's temperature.

The advantage of this method for temperature measurement is that no electrical contact is needed, and that the tool may be operated at any angular velocity. The presence of coolant fluid at the machined surface does not interfere with the temperature measurement, and even an ingress of fluid at the shaft end of the drill will pose only little problems.

### Detailed Description of the Invention

In view of above the method for measuring the temperature of rotating machining tools comprises: providing an optical fiber sensor; inserting said optical fiber sensor into the rotating machining tool; directing light from a light source into said optical fiber of said fiber sensor; detecting changes of optical properties of said optical fiber sensor as a function of temperature in the reflected light leaving said optical fiber; and correlating said changes of optical properties to the temperature of the machining tool.

According to an embodiment the change of the optical properties of said optical fiber or the optical properties of optical elements in the optical fiber as a function of temperature are measured. For measuring the change of optical properties of the optical fiber, Raman scattering can be used. For measuring the change of optical properties of optical elements, the reflections at the optical elements are used for the determination of the temperature.

According to further embodiment, in which the changes of the optical properties as a function of temperature are due to at least one optical element, preferably a Bragg grating, the at least one optical element is integrated into the optical fiber. Then the optical fiber has to be adapted for minimized reflections at the end of the fiber.

In another preferred embodiment the wavelength and its spectral intensity distribution of the reflected light is analyzed and the result is correlated to the temperature of the machining tool.

In a further embodiment of the invention the method comprises detecting the reflected light via a photodiode, tuning the light source for keeping an output signal of the photodiode at its maximum, and correlating the tuning parameters for the light source to the temperature of the machining tool.

In another embodiment of the invention the changes of the optical properties of the optical fiber as a function of temperature are due to Raman scattering in the optical fiber. Raman scattering is an inelastic scattering of light at optical phonons in Stokes-Lines. Advantageously, since these lines are temperature dependent, these lines can be used for the temperature measurement according to the invention by sending a short light pulse into the optical fiber and analyzing the Stokes wavelength of the back scattering over time. The wavelength gives information concerning the temperature and the runtime gives information concerning the location.

In another preferred embodiment the changes of the optical properties as a function of temperature are detected simultaneously on several locations in the fiber.

According to a further embodiment the method is applied for measuring the temperature of a dental or orthopedic drill or milling cutter or in a drill or milling cutter or any rotating tool in machining applications.

The apparatus for measuring the temperature of rotating machining tools according to the invention, comprises an optical fiber sensor inserted into the rotating machining tool, said optical fiber sensor comprises optical means which change its optical properties as a function of temperature; a means to detect the changes of said optical properties as a function of temperature; and a means to correlate said changes of optical properties to the temperature of the machining tool.

The apparatus according to the invention comprises in an embodiment at least one optical element that changes the optical properties as a function of temperature, preferably a Bragg grating, integrated into the optical fiber, said optical fiber having minimized reflectivity at the end of the fiber.

In a further embodiment of the apparatus the light used to detect the changes in optical properties of the optical fiber is brought to, and collected from, the optical fiber via a second optical fiber, and where the second optical fiber is not connected mechanically to the optical fiber.

Advantageously, the coupling of the light between the optical fiber and the second optical fiber is a free-space coupling. Preferably the coupling of the light between the optical fiber and the second optical fiber is performed by refractive or reflective components between the optical fiber and the second optical fiber.

In a further preferred embodiment the changes of the optical properties as a function of temperature are detected via the second optical fiber by a spectrometer or a tunable spectrometer, respectively. In another preferred embodiment the light source is at least one single-mode laser.

The present invention proposes a solution for the temperature measurement in rotating machining tools which avoids the transmission of electrical signals, and which can be integrated even in very small machining tools such as small dental drills. It continuously measures the temperature of the machining tool and is not sensitive to liquid coolants. Although the invention is primarily targeted to the application with dental implants, it is as well applicable to other medical applications as orthopedic implants, and to rotating machining tools in general.

To the accomplishment of the foregoing and related ends, the invention, then, comprises the features fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages, and novel features of the invention will become apparent from the following detailed description of the invention when considered in conjunction with the drawings.

### Detailed Description of the Drawings

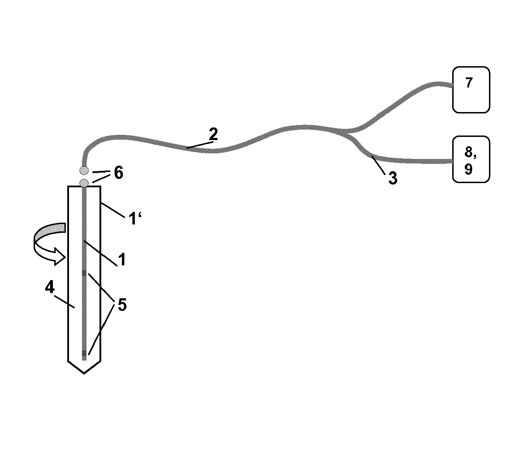

The only figure shows a principle depiction of the arrangement of an optical fiber sensor in connection with two different detection instruments.

### Detailed Description of the Drawings of the Invention

In the following, the temperature measurement by the optical fiber is described using the example of Bragg scattering in a dental drill.

In a first embodiment, light from an appropriate remote light source 7 (of essentially white light) is conducted via a second optical fiber 2 from the light source 7 to the end of the second optical fiber 2 which is located near the shaft end of the first optical fiber 1 of an optical fiber sensor 1'. The first optical fiber 1 is located inside the drill 4 and bears at least one Bragg grating 5 at an appropriate location.

The light is coupled from the end of the second optical fiber 2 into the first optical fiber 1 by appropriate means. Such means may comprise mirrors for angular reflections, as well as ball lenses 6 or other lenses.

Traveling along the first optical fiber 1, a specific wavelength correlating to the Bragg grating 5 will be reflected back by the Bragg grating 5, whereas all other wavelengths will experience partial absorption at the far end of the first optical fiber 1.

The reflected light travels back to the shaft end of the first optical fiber 1, and is coupled into the second optical fiber 2. Typically at the end of this second optical fiber, it is split into a third optical fiber 3 which feeds the reflected light into the aperture of a spectrometer 8.

The spectrometer 8 provides means to analyze the wavelength of the back-reflected light, and the spectral intensity distribution of the back-reflected light will show a distinct maximum at a wavelength defined by the Bragg grating 5 located in the first optical fiber 1.

As the grating constant of the Bragg grating 5 on the first optical fiber 1 will change with temperature due to the thermal expansion of the first optical fiber 1, the maximum of the spectral intensity distribution of the back-reflected light will shift its wavelength accordingly. This wavelength is therefore a measure of the temperature of the Bragg grating 5 in the first optical fiber 1 located inside the tool 4. Similarly, if multiple Bragg gratings 5 are implemented onto the first optical fiber 1 at different locations and with different grating constants, the spectrum of the back-reflected light will show an according number of maxima in the spectral intensity distribution, which each will shift with the actual temperature at the respective Bragg grating's location. It is therefore possible to measure the temperatures at different locations of the first optical fiber independently.

In a second embodiment, the light source 7 is composed of at least one laser light source (preferentially operated in single mode), the wavelength of which is chosen to correspond to the reflection wavelength of the Bragg grating 5. It is essential that the wavelength of the laser can be slightly tuned (i.e. several hundred picometers to a few nanometers). Preferentially, the wavelength of said laser light source is located in the near-infrared region between 1 µm and 2 µm.

The light from the remote laser light source 7 is conducted via a second optical fiber 2 from the light source 7 to the end of the second optical fiber 2 which is located near the shaft end of the first optical fiber 1, the first optical fiber 1 being located inside the drill 4 and bearing at least one Bragg grating 5 at an appropriate location.

The light is coupled from the end of the second optical fiber 2 into the first optical fiber 1 by appropriate means. Such means may comprise mirrors for angular reflections, as well as ball lenses 6 or other lenses.

Traveling along the first optical fiber 1, the light will be reflected back by the Bragg grating 5 if its wavelength correlates to the Bragg grating 5, whereas it will experience partial absorption at the far end of the first optical fiber 1 if it does not correlate to the Bragg grating 5.

The reflected light travels back to the shaft end of the first optical fiber 1, and is coupled into the second optical fiber 2. Typically at the end of this second optical fiber, it is split into a third optical fiber 3 which feeds the reflected light onto a photodiode 9.

The photodiode 9 is used as detector in a feedback loop which tunes the wavelength of the laser light source 7 such that the output signal of the photodiode 9 reaches its maximum. In case of a single-mode laser diode, tuning parameters would be laser drive current or laser temperature.

As the grating constant of the Bragg grating 5 on the first optical fiber 1 will change with temperature due to the thermal expansion of the first optical fiber 1, the laser light source 7 has to be tuned accordingly in order to keep the signal of the photodiode 7 at its maximum. The wavelength tuning parameter of the laser light source 7 (i.e. its drive current) is therefore a measure of the temperature of the Bragg grating 5 in the first optical fiber 1 located inside the tool 4.

In a preferred execution of this embodiment, the drive current of the laser light source 7 is super-imposed with a small alternative current of defined frequency such that the wavelength of the laser light source 7 constantly oscillates around a center wavelength. If the reflection wavelength of the Bragg grating 5 is within the oscillation range of the laser light source 7, the signal of the photodiode 9 will contain an AC signal at twice the laser modulation frequency which is detected by a phase-locked amplifier with very high selectivity. The tuning parameter of the laser light source 7 is used to maintain the output of said phase-locked amplifier at its maximum and therefore serves as a measure for the temperature of the Bragg grating 5 located in the optical fiber 1.

Similarly, if multiple Bragg gratings 5 are implemented onto the first optical fiber 1 at different locations and with different grating constants, each Bragg grating 5 will be detected by an individually attributed laser light source 7 which is set to the wavelength of the respective Bragg grating 5. If each laser light source 7 is modulated at a different frequency, the signal of the photodiode 9 can be selectively analyzed for each first harmonic of each laser modulation frequency, so that each laser light source 7 can be separately tuned in order to maximize the respective first harmonic photodiode signal. It is therefore possible to measure the temperatures at different locations of the first optical fiber independently

### Figure Legend

1 - first optical fiber
2 - second optical fiber
3 - third optical fiber
4 - tool (drill)
5 - Bragg gratings
6 -optical coupling means
7 - light source
8 - spectrometer
9 - photodiode

## Claims

1. A method for measuring the temperature of rotating machining tools, comprising
providing an optical fiber sensor (1');
inserting said optical fiber sensor (1') into the rotating machining tool (4); directing light from a light source (7) into said optical fiber (1) of said fiber sensor (1');
detecting changes of optical properties of said optical fiber sensor (1') as a function of temperature in the reflected light leaving said optical fiber (1); and
correlating said changes of optical properties to the temperature of the machining tool (4).

2. The method according to claim 1, **characterized by** measuring the change of the optical properties of said optical fiber (1) or the optical properties of optical elements (5) in the optical fiber (1) as a function of temperature.

3. The method according to claim 2, **characterized in that** the changes of the optical properties as a function of temperature are due to at least one optical element, preferably a Bragg grating (5), integrated into the optical fiber (1), said fiber having minimized reflectivity at the end of the fiber (1).

4. The method according to claim 3, **characterized by** analysing the wavelength and its spectral intensity distribution of the reflected light and correlating the result to the temperature of the machining tool (4).

5. The method according to claim 3, **characterized by** detecting the reflected light via a photodiode (9), tuning the light source (7) for keeping an output signal of the photodiode (9) at its maximum, and correlating the tuning parameters for the light source (7) to the temperature of the machining tool (4).

6. The method according to claim 2, **characterized in that** the changes of the optical properties as a function of temperature are due to Raman scattering in the optical fiber (1).

7. The method according to claim 2, **characterized in that** the changes of the optical properties as a function of temperature are detected simultaneously on several locations in the fiber (1).

8. The method according to any of the above claims, **characterized by** measuring the temperature of a dental or orthopedic drill or milling cutter or in a drill or milling cutter or any other rotating tool in machining applications.

9. An apparatus for measuring the temperature of rotating machining tools, comprising
an optical fiber sensor (1') inserted into the rotating machining tool (4), said optical fiber sensor (1') comprises optical means which change its optical properties as a function of temperature;
a means to detect the changes of said optical properties as a function of temperature; and
a means to correlate said changes of optical properties to the temperature of the machining tool (4).

10. The apparatus according to claim 9, **characterized by** at least one optical
element that changes the optical properties as a function of temperature, preferably a Bragg grating (5), integrated into the optical fiber (1), said optical fiber (1) having minimized reflectivity at the end of the fiber (1).

11. The apparatus according to claim 9 or 10, **characterized in that** the light
used to detect the changes in optical properties of the optical fiber (1) is brought to, and collected from, the optical fiber (1) via a second optical fiber (2), and where the second optical fiber (2) is not connected mechanically to the optical fiber (1).

12. The apparatus according to claim 11, **characterized in that** the coupling of
the light between the optical fiber (1) and the second optical fiber (2) is a free-space coupling.

13. The apparatus according to claim 12, **characterized in that** the coupling of
the light between the optical fiber (1) and the second optical fiber (2) is performed by refractive or reflective components (6) between the optical fiber (1) and the second optical fiber (2).

14. The apparatus according to any of the above claims 10 to 13,
**characterized in that** the changes of the optical properties as a function of temperature are detected via the second optical fiber (2) by a spectrometer (8).

15. The apparatus according to any of the above claims 10 to 13,
**characterized in that** the light source (7) is at least one single-mode laser.
